Europäisches Patentamt

European Patent Office

Office européen des brevets

(11) Numéro de publication: **0 222 647 B1**

## (12) FASCICULE DE BREVET EUROPEEN

(45) Date de publication du fascicule du brevet:
**27.06.90**

(21) Numéro de dépôt: **86402277.7**

(22) Date de dépôt: **14.10.86**

(51) Int. Cl.⁵: **G11B 5/54**, G11B 5/60

(54) **Dispositif de relevage de patins porte-têtes magnétiques d'enregistrement et/ou de lecture, dans un appareil à mémoire à disques.**

(30) Priorité: **14.10.85 FR 8515204**

(43) Date de publication de la demande:
**20.05.87 Bulletin 87/21**

(45) Mention de la délivrance du brevet:
**27.06.90 Bulletin 90/26**

(84) Etats contractants désignés:
**BE DE GB IT**

(56) Documents cités:
**FR-A- 2 089 595**
**US-A- 3 984 873**

**IBM TECHNICAL DISCLOSURE BULLETIN,
vol. 18, no. 9, février 1976, pages 3018-3019, Armonk,
N.Y., US; S.E. WHEELER: "Magnetic head load/unload
device"
PATENTS ABSTRACTS OF JAPAN,
vol. 9, no. 156 (P-368)[1879], 29 juin 1985; &
JP-A-60 29 981 (MITSUBISHI DENKI K.K.) 15-02-1985
PATENTS ABSTRACTS OF JAPAN,
vol. 10, no. 93 (P-445)[2150], 10 avril 1986; &
JP-A-60 226 078 (TOSHIBA K.K.) 11-11-1985**

(73) Titulaire: **SOCIETE D'APPLICATIONS GENERALES
D'ELECTRICITE ET DE MECANIQUE SAGEM, 6, Avenue
d'Iéna, F-75783 Paris Cédex 16(FR)**

(72) Inventeur: **Garcia, Salvador, 31 Rue du Pardon,
F-95100 Argenteuil(FR)**
Inventeur: **Vetu, Christian, 15 Avenue Audra,
F-92700 Colombes(FR)**

(74) Mandataire: **Picard, Jean-Claude Georges et al, Cabinet
Plasseraud 84, rue d'Amsterdam, F-75009 Paris(FR)**

## Description

La présente invention concerne un dispositif de relevage de patins porte-têtes magnétiques d'enregistrement et/ou de lecture, dans un appareil à mémoire a disques, chaque patin étant porté, l'intermédiaire d'un ressort d'attitude, par un bras de support couplé à des moyens moteurs, de sorte que les patins puissent se déplacer radialement par rapport aux disques, à très faible distance de la face intéressée de ceux-ci, ce dispositif comportant, pour chaque patin, une rampe de relevage fixe inclinée par rapport à la surface des disques et, à l'extrémité dudit bras de support, une pièce de glissement propre à coopérer avec ladite rampe et à écarter ledit patin de la surface du disque concerné sans effort exercé directement sur ledit patin ou son ressort d'attitude, lorsque, par actionnement desdits moyens moteurs, ledit bras de support est déplacé radialement.

Pour le transport de tels appareils ou lorsque pour toute autre raison ils sont susceptibles de subir des vibrations ou des chocs en période de non-utilisation, il convient d'amener les patins qui portent les têtes magnétiques dans une position telle qu'ils ne puissent heurter les zones magnétiques des disques, ce qui les endommagerait.

Dans certains appareils, à cet effet, on procède par relevage et extraction des patins de la façon suivante : l'extrémité du bras de support auquel le patin est suspendu glisse sur une rampe de relevage du patin, tandis que celui-ci est extrait d'entre les disques par une rotation du bras. Ce type de système, décrit par exemple dans le document US-A-3 984 873, présente l'inconvénient d'augmenter notablement l'encombrement de l'appareil.

Dans d'autres appareils du type à relevage des patins (FR-A-2 089 595), les patins ne sont pas extraits d'entre les disques lors du relevage, mais les rampes fixes, qui permettent d'obtenir le relevage des patins lors d'un déplacement radial de leurs bras de support, sont extérieures aux disques et disposées latéralement par rapport à ces bras ; ce déplacement radial des bras est de sens centrifuge. Là encore, l'inconvénient de ces appareils réside entre autres dans leur grand encombrement, surtout si l'on utilise plusieurs bras porte-patins disposés les uns à côté des autres selon la périphérie des disques.

Le but de la présente invention est de remédier à ces inconvénients des techniques antérieures, notamment, mais non exclusivement, dans le cas des appareils à mémoire à disques comportant plusieurs patins par face de disque, radialement décalés.

A cet effet, l'invention concerne un dispositif de relevage de patins du type mentionné au début, essentiellement caractérisé en ce que ladite rampe de relevage fixe est intérieure, à savoir située entre les disques, non loin de l'axe de rotation de ceux-ci, et en ce que lors de l'opération de relevage ledit bras de support se déplace radialement vers ledit axe.

De la sorte, on réduit considérablement l'encombrement de l'appareil, les rampes de relevage étant disposées à l'intérieur, entre les disques ; l'appareil est beaucoup plus compact et simplifié, par comparaison avec les appareils connus.

Le fait que les rampes de relevage soient disposées à proximité de l'axe de rotation des disques permet d'obtenir en outre un avantage très notable : pour tenir compte des imprécisions mécaniques inévitables au niveau des rampes, il convient de prévoir, dans tous les appareils du type à relevage des patins, et à titre de sécurité, une certaine distance radiale selon laquelle les pistes les plus proches de ces rampes seront dépourvues d'informations, étant donné que, à partir d'un abaissement des patins vers les disques, ces patins se déplacent radialement, bien entendu dans le sens qui les éloigne des rampes. Ceci étant, le fait de prévoir ces rampes à proximité de l'axe de rotation des disques permettra de réduire la longueur du développé des pistes sur laquelle il n'y aura pas d'informations, puisque ces pistes sont près du centre. La longueur perdu des pistes est ainsi notablement moins importante qu'avec les appareils dans lesquels les rampes sont extérieures aux disques.

Dans un dispositif destiné à un appareil du type à empilage de disques, des bras de support portant des patins étant agencés dans chacun des espaces séparant deux disques voisins, un groupe des patins étant affecté à un des disques et l'autre groupe à l'autre disque, on peut encore prévoir, conformément à l'invention, dans chacun desdits espaces, une pièce commune portant deux rampes de relevage symétriques l'une de l'autre par rapport à un plan médian parallèle aux disques, ces rampes étant respectivement affectées auxdits groupes de patins.

Un mode d'exécution de l'invention ainsi que d'autres dispositions vont maintenant être décrits avec référence aux figures du dessin annexé dans lequel :

- la figure 1 est une vue en plan schématique et partielle d'un appareil à mémoire à disques équipé d'un dispositif de relevage de patins conforme à la présente invention ;
- la figure 2 est une vue schématique en coupe verticale montrant un dispositif de relevage associé à deux bras de support disposés entre deux disques consécutifs de l'appareil ;
- la figure 3 est une vue de dessous, partielle et plus détaillée, du dispositif de relevage associé à un bras de support ; et
- la figure 4 est la vue correspondante en élévation.

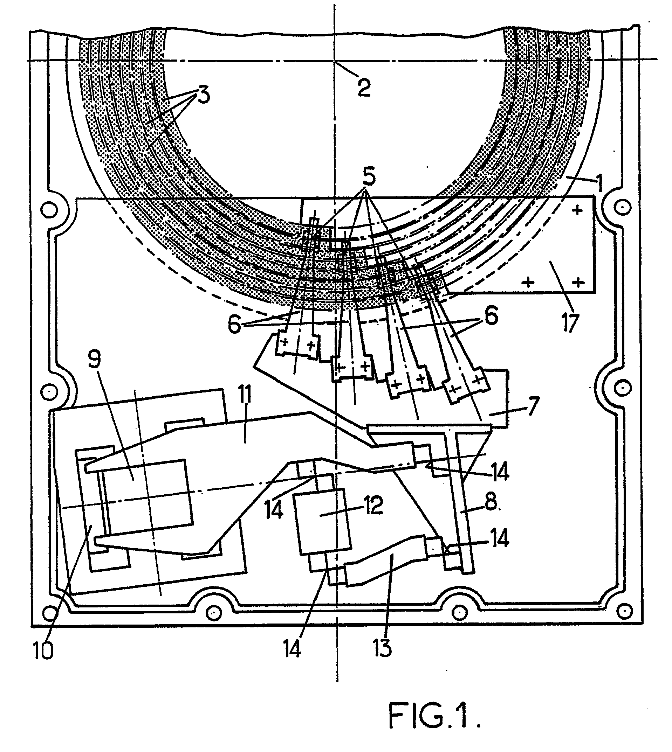

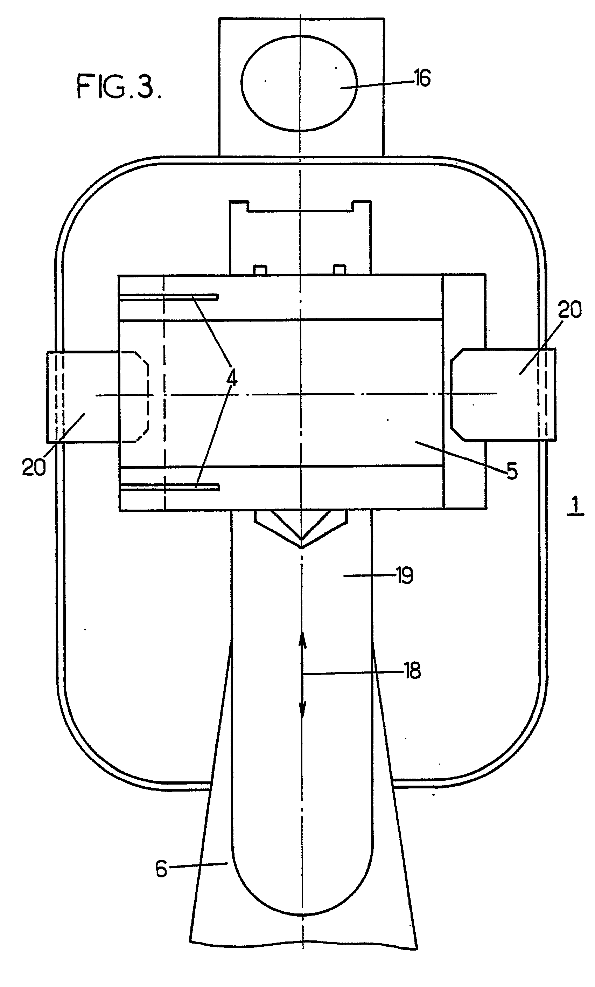

Sur la figure 1, on a référencé en 1 un disque magnétique à axe de rotation 2 et pouvant faire partie d'un empilage de disques sur le même axe. Ces disques possèdent deux faces magnétiques portant des zones magnétiques concentriques 3 propres à être explorées par des têtes magnétiques 4. Ces têtes sont portées par des patins 5 à raison, par exemple, de deux par patin (voir figure 3). Chaque patin étant affecté à deux zones magnétiques consécutives 3 (une zone par tête 4), on voit sur la figure 1 que l'appareil comporte quatre patins 5, le nombre de zones magnétiques étant de huit. Les patins 5 sont donc radialement décales, chacun par rapport au suivant.

Comme également visible sur la figure 1, chaque patin 5 est porté par un bras de support constituant un ressort principal 6, qui produit la force nécessaire à la compensation des efforts aérodynamiques agissant sur le patin lors de la rotation du disque, les quatre bras 6 étant eux-mêmes solidaires d'un support commun 7 porté par un bras 8.

Les moyens moteurs permettant de faire effectuer aux bras 6 et donc aux patins 5 des déplacement radiaux comprennent un moteur électrodynamique dont l'organe mobile est constitué d'une bobine 9 alimentée en courant de façon contrôlée et située dans le champ magnétique d'un aimant permanent 10. Cette bobine est reliée mécaniquement au bras 8 par un système à parallélogramme articulé comprenant un bras principal 11, une référence fixe 12, un bras secondaire 13 et le bras 8, ces éléments étant reliés deux à deux de façon articulée par des axes parallèles 14, perpendiculaires aux plans des disques 1.

L'appareil à mémoire à disques étant ainsi décrit dans ses grandes lignes, on va maintenant décrire le système de relevage faisant plus particulièrement l'objet de l'invention.

Il comporte pour l'essentiel une rampe fixe de relevage 15 pouvant coopérer par glissement relatif avec des pièces de glissement 16 prévues à l'extrémité de chacun des bras 6. L'inclinaison et la configuration des différentes parties de cette rampe 15 sont telles que les patins 5 intéressant au moins une même face de disque soient tous écartés de celle-ci lors d'un déplacement radial du support commun 7, en direction de l'axe 2, provoqué par un actionnement des moyens moteurs 9, 10.

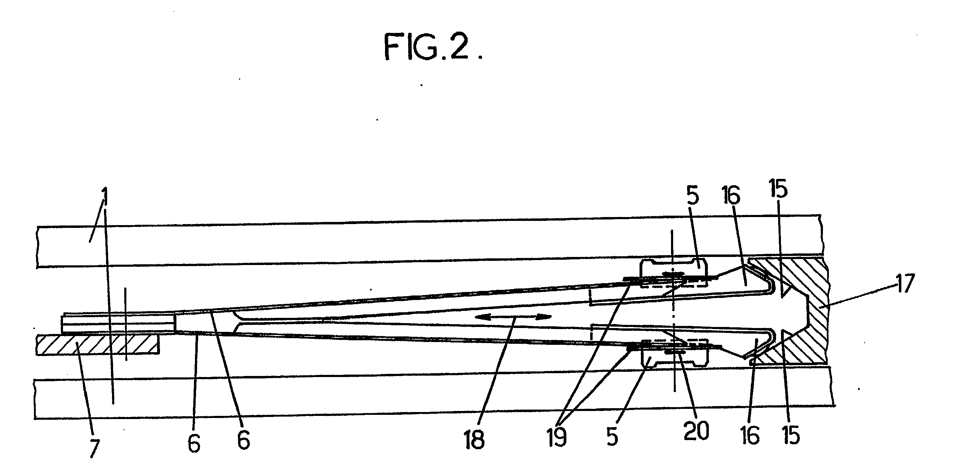

Sur la figure 2, on a représenté deux disques magnétiques 1 d'un empilage de disques, et deux bras de support 6 disposés symétriquement l'un par rapport à l'autre, et dont chacun porte à son extrémité un patin porte-têtes 5, ces patins étant respectivement affectés à la lecture de deux zones 3 en regard sur les disques 1 (ou à l'enregistrement d'informations sur ces zones).

Les pièces de glissement 16 des deux bras peuvent alors glisser respectivement sur les deux rampes de relevage 15 prévues sur une pièce unique 17 et symétriques l'une de l'autre par rapport à un plan médian parallèle aux disques.

On voit clairement sur la figure 2 que lorsque, sous l'action des moyens moteurs 9, 10, le support commun 7 des bras 6 s'est déplacé radialement vers l'axe 2, les pièces 16 ont glissé respectivement sur les deux rampes 15, provoquant ainsi l'écartement des patins 5 par rapport aux faces en regard des deux disques 1.

Lorsque cette opération de relevage a été effectuée, on met en oeuvre des moyens de verrouillage du moteur électrodynamique, par exemple un dispositif à électro-aimant, pour éviter qu'en absence de courant alimentant la bobine les bras ne se déplacent en sens inverse, radialement vers l'extérieur, ce qui ferait redescendre les patins sur les disques. On peut prévoir à cet effet que le plongeur de l'électro-aimant vient se bloquer en l'absence de courant dans un logement du bras 8 du dispositif de positionnement.

On peut prévoir également, pour pouvoir relever les patins 5 même après coupure des tensions d'alimentation de l'appareil, que le courant nécessaire à l'actionnement des moyens moteurs 9, 10 provient dans ce cas de la récupération de l'énergie de rotation des disques 1 par l'intermédiaire de leur moteur d'entraînement, de type courant continu ou similaire.

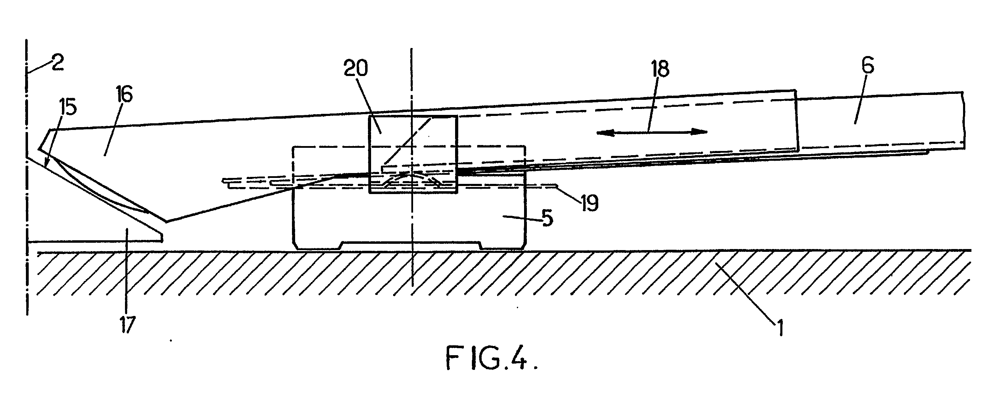

Sur les figures 2 à 4, on a référencé en 18 des flèches radiales montrant les déplacements possibles des bras 6, et on a représenté en 19 des ressorts d'attitude à très faible raideur, permettant aux patins 5 de prendre leur "attitude de vol" correcte sur les disques 1 en rotation, après le retrait des bras 6 des rampes 15.

Pour que, lors du relevage, puis du blocage des patins 5 en position écartée des disques 1, les ressorts d'attitude 19 ne soient pas déformés, risquant ainsi de compromettre le comportement ultérieur des patins 5 dans les phases de mise en vol, vol normal ou relevage suivant, deux dispositions principales sont adoptées.

La première consiste à faire exercer les efforts de relevage au niveau des bras 6 par l'intermédiaire des pièces de glissement 16, et en aucun cas directement sur les patins 5 ou les ressorts d'attitude 19.

La seconde consiste à pourvoir les bras 6 de limiteurs de débattement 20 des patins 5, réalisés sous la forme d'équerres qui passent avec un faible jeu sous des parties en débordement des patins 5, et qui exercent leur action de limitation de débattement desdits patins en cas de chocs ou vibrations survenant en cours de relevage ou en position relevée.

## Revendications

1. Dispositif de relevage de patins porte-têtes magnétiques d'enregistrement et/ou de lecture, dans un appareil à mémoire à disques, chaque patin (5) étant porté, par l'intermédiaire d'un ressort d'attitude, par un bras de support (6) couplé à des moyens moteurs (9, 10), de sorte que les patins puissent se déplacer radialement par rapport aux disques (1), à très faible distance de la face intéressée de ceux-ci, ce dispositif comportant, pour chaque patin (5), une rampe de relevage fixe (15) inclinée par rapport à la surface des disques (1) et, à l'extrémité dudit bras de support (6), une pièce de glissement (16) propre à coopérer avec ladite rampe (15) et à écarter ledit patin (5) de la surface du disque concerné (1) sans effort exercé directement sur ledit patin (5) ou son ressort d'attitude (19), lorsque, par actionnement desdits moyens moteurs (9, 10), ledit bras de support (6) est déplacé radialement, caractérisé en ce que ladite rampe de relevage fixe (15) est intérieure, à savoir située entre les disques, non loin de l'axe de rotation (2) de ceux-ci, et en ce que lors de l'opération de relevage ledit bras de support (6) se déplace radialement vers ledit axe (2).

2. Dispositif selon la revendication 1, destiné à un appareil du type à empilage de disques (1), des bras de support (6) portant des patins (5) étant agencés dans chacun des espaces séparant deux disques (1) voisins, un groupe des patins (5) étant affecté à un des disques et l'autre groupe à l'autre disque, caractérisé en ce qu'il comporte, dans chacun desdits espaces, une pièce commune (17) portant deux rampes de relevage (15) symétriques l'une de l'autre par rapport à un plan médian parallèle aux disques, ces rampes étant respectivement affectées auxdit groupes de patins (5).

3. Dispositif selon la revendication 1 ou 2, caractérisé en ce qu'il comprend des moyens de verrouillage desdits bras de support (6), maintenant les patins (5) dans leur position écartée des surfaces respectives des disques (1), même lorsque lesdits moyens moteurs (9, 10) ne sont pas actionnés.

4. Dispositif selon l'une quelconque des revendications précédentes, caractérisé en ce qu'il comporte des limiteurs de débattement (20) constituant des butées pour les patins (5), propres à limiter leurs déplacements par rapport aux bras de support respectifs (6) et à empêcher la déformation des ressorts d'attitude (19) lorsque, par suite de la coopération des rampes (15) et des pièces de glissement (16), lesdits bras sont dans leur position bloquée, écartée des disques respectifs (1).

**Claims**

1. A lifting device for magnetic recording and/or playback head carrier shoes in a disc drive, each shoe (5) being carried, through the agency of an attitude spring, by a support arm (6) coupled to drive means (9, 10) so that the shoes can move radially relatively to the discs (1) at a very slight distance from the surface thereof concerned, said system comprising, for each shoe (5), a fixed lifting surface (15) which is inclined relatively to the surface of the discs (1) and, at the end of the said support arm (6), a sliding member (16) adapted to co-operte with said inclined surface (15) and to move said shoe (5) away from the surface of the disc concerned (1) without any force being exerted directly on said shoe (5) or its attitude spring (19), when, by actuation of said drive means (9, 10), said support arm (6) is moved radially, characterised in that the said fixed inclined lifting surface (15) is internal, i.e. situated between the discs, not far from the axis of rotation (2) thereof, and in that during the lifting operation the said support arm (6) moves radially towards said axis (2).

2. A system according to claim 1, for an appliance of the type comprising a stack of discs (1), support arms (6) which carry shoes (5) being arranged in each of the spaces between two adjacent discs (1), one group of shoes (5) being associated with one of the discs and the other group with the other disc, characterised in that it comprises, in each of said spaces, a common member (17) bearing two inclined lifting surfaces (15) symmetrical to one another relative to a central plane parallel to the discs, said inclined surfaces being respectively associated with said groups of shoes (5).

3. A system according to claim 1 or 2, characterised in that it comprises means for locking said support arms (6), holding the shoes (5) in the position in which they are moved away from the respective surfaces of the discs (1), even when said drive means (9, 10) are not actuated.

4. A system according to any one of the preceding claims, characterised in that it comprises deflection limiters (20) in the form of stops for the shoes (5) to limit their movements relative to the respective support arms (6) and prevent deformation of the attitude springs (19) when, as a result of the cooperation of the inclined surfaces (15) and the sliding members (16), said arms are in their locked position remote from the respective discs (1).

**Patentansprüche**

1. Hebevorrichtung für magnetische Schreib- und/oder Lesekopfgleiter in einem Plattenspeichergerät, wobei jeder Gleiter (5) durch Zwischenschaltung einer Haltefeder von einem mit Antriebsmitteln (9, 10) gekoppelten Stützarm (6) getragen ist, derart, daß die Gleiter radial im Verhältnis zu den Platten (1) mit einer sehr geringen Entfernung von der beteiligten Fläche derselben verschiebbar sind, wobei die Vorrichtung für jeden Gleiter (5) eine feste Heberampe (15), die im Verhältnis zur Oberfläche der Platten (1) geneigt ist, und am Ende des Stützarmes (6) ein Gleitstück (16) aufweist, das zum Zusammenwirken mit der Rampe (15) und zum Entfernen des Gleiters (5) von der Oberfläche der betreffenden Platte (1) ohne direkte Einwirkung auf die Platte (5) oder ihre Haltefeder (19) geeignet ist, wenn durch Antrieb der Antriebseinrichtungen (9, 10) der Stützarm (6) radial verschoben wird, dadurch gekennzeichnet, daß die feste Heberampe (15) innerhalb, nämlich zwischen den Platten nicht weit von der Drehachse (2) derselben, angeordnet ist und daß sich während des Hebevorganges der Stützarm (6) radial gegen die Achse (2) verschiebt.

2. Vorrichtung nach Anspruch 1 zum Einsatz in einem Apparat mit einem Stapel von Platten (1), wobei Gleiter (5) tragende Stützarme (6) in jedem der zwei benachbarten Platten (1) trennenden Zwischenräume angeordnet sind und eine Gruppe von Platten (5) der einen der Platten und die andere Gruppe der anderen Platte zugeordnet sind, dadurch gekennzeichnet, daß in jedem der Zwischenräume ein gemeinsames Stück (17) angeordnet ist, das zwei Heberampen (15) trägt, welche symmetrisch zueinander im Verhältnis zu einer zu den Platten parallelen Mittelebene angeordnet sind, wobei die Rampen jeweils den Gruppen von Platten (5) zugeordnet sind.

3. Vorrichtung nach Anspruch 1 oder 2, gekennzeichnet durch Verriegelungsmittel für die Stützarme (6), welche die Platten (5) in ihrer von den jeweiligen Oberflächen der Platten (1) entfernten Position halten, selbst wenn die Antriebsmittel (9, 10) nicht betätigt sind.

4. Vorrichtung nach einem der vorangehenden Ansprüche, gekennzeichnet durch Verschiebebegrenzungseinrichtungen (20), welche Anschläge für die Platten (5) bilden und geeignet sind, die Verschiebung der Platten im Verhältnis zu den jeweiligen Stützarmen (6) zu begrenzen und die Deformation der Haltefedern (19) zu verhindern, wenn infolge des Zusammenwirkens der Rampen (15) und der Gleitstücke (16) sich die Arme in ihrer von den jeweiligen Platten (1) entfernten blockierten Position befinden.

FIG.1.

# FIG.2.

EP 0 222 647 B1

FIG.3.

FIG.4.

EP 0 222 647 B1